# EUROPEAN PATENT APPLICATION

(11) **EP 3 024 152 A1**
(43) Date of publication of application: **25.05.2016**
(21) Application number: 14787459.8
(22) Date of filing: 16.05.2014
(51) Int. Cl.: H04B 1/40

(54) **METHOD FOR USING SAMPLE POINT LEVEL ACCELERATOR FOR DATA PROCESSING, AND SAMPLE POINT LEVEL ACCELERATOR**

(30) Priority: 18.07.2013 CN 201310302253
(71) Applicant: ZTE Corporation, Shenzhen, Guangdong 518057 (CN); ZTE Microelectronics Technology Co., Ltd., Guangdong 518000 (CN)
(72) Inventor: CHEN, Xiaoqiang, Shenzhen Guangdong 518057 (CN)
(74) Representative: Schröer, Gernot H.
(86) International application number: PCT/CN2014/077677
(87) International publication number: WO 2014/173338

(57) **Abstract**

Disclosed are a method for using a sample-level accelerator for data processing and a sample-level accelerator thereof, wherein the method is applied to a multi-mode base station baseband sample-level accelerator, including: receiving configuration parameters and collecting initiation control messages; after receiving the initiation control message, if it is determined that the present accelerator currently is not performing uplink and downlink data processing and currently is not performing parameter configuration, parsing and configuring the configuration parameters to the present accelerator, then reading and writing and processing uplink and downlink data sent by a soft core to the present accelerator based on the configured configuration parameters. With the embodiment of the present invention, compared with the related art, it significantly increases throughput of multimode baseband processing; decreases the dependence between a chip hardware design and a wireless communication protocol to a very low level, and the initiation and termination of an accelerator are not limited by time and can be scheduled at any time; various modes can be quickly configured and switched in real time, thus effectively reducing the complexity of configuration and control.

## Description

### Technical Field

The present invention relates to the field of wireless communications, digital signal processing and integrated circuit design, and more particularly, to a method for using a sample-level accelerator for data processing and a sample-level accelerator thereof

### Background of the Related Art

In recent years, the development of human society information technology, increasing bandwidth and high-speed data transmission requirements promote the rapid development of mobile communications technology. In a short period of two decades, the digital mobile communication system has experienced the transition and evolution from the most widely used second-generation mobile communication system (2G) to the third generation mobile communication system (3G) with the WCDMA (Wideband Code Division Multiple Access), CDMA2000 (Code Division Multiple Access 2000) and TD-SCDMA (Time Division-Synchronous CDMA, a Synchronous Code Division Multiple Access using the Time Division duplexing technology) being the main standards, and then to the fourth generation mobile communication system (4G) with the FDD (Frequency Division Duplexing)-LTE (Long Term Evolution) and TDD (Timing Division Duplexing)-LTE being the representatives. With limited spectrum resources, how to increase the transmission efficiency has become a major issue that major operators and equipment manufacturers have to face.

In addition, the rapid technology evolution is along with a huge investment in network construction. Based on this, on the one hand, a variety of mode standards will coexist in the 2G, 3G and 4G for a long time; and on the other hand, the operators are eager to upgrade smoothly between various modes with relatively small investment in order to reduce costs, which makes interconnection between various modes possible.

The appearance of Software Defined Radio (referred to as SDR) provides a possibility to solve the abovementioned problem. The SDR uses modular design for wireless communication systems of different frequency bands, different bandwidths and different protocols on the basis of the general hardware, and achieves different functions by loading different software modules, which not only allows existing communication devices to meet the user's needs through the software upgrade, but also saves the cost and extends the service life of the devices.

To meet the SDR requirements, a wireless soft base station multi-mode building baseband unit (referred to as BBU) supporting a variety of modes emerges at the fight moment. The multimode base station baseband sample-level processing is the very key part of the baseband processing, and is an important implementation step of the baseband signal modulation and demodulation. For the implementation of a multi-mode base band sample-level processing unit, typical implementation methods in the industry are divided into software implementation and hardware implementation. The Chinese patent application whose Application No. is CN200580051301.6 provides a method for achieving the multi-mode wireless baseband sample-level processing through software in the DSP (Digital Signal Processor). The advantage of this method is that its flexibility is strong, and it can flexibly customize the software module for different modes and networking requirements to realize the multi-mode processing; its drawback is that the cost of using pure DSP processing is high and the equipment power consumption is large. The patent application whose Application No. is WO2011079765 (A1) provides a wireless base station multi-mode processing apparatus, the sample-level processing part of the baseband processing unit is implemented respectively for various modes, and then it is called according to the modes of processing to achieve the implementations of the various modes. The advantage of this method is that the processing is performed for each mode separately, and the implementation is easy; its drawback is that it is to implement for each mode separately, the resource overhead is large and the unnecessary waste will be caused.

In summary, for the wireless multi-mode base station baseband sample-level processing, all conventional implementations adopt the method of exchanging the resources or power for multi-mode processing, and the conventional implementations are under great criticisms and challenges in the case that the operators have increasingly high requirements on power and cost.

### Summary of the Invention

The purpose of the present invention is to provide a method for using a sample-level accelerator to perform data processing and a sample-level accelerator thereof to overcome the defect that existing implementations have large resource overhead and large power consumption.

To solve the abovementioned problem, the present invention provides a method for using a sample-level accelerator to perform data processing, applied in a multi-mode base station baseband sample-level accelerator, comprising:
receiving configuration parameters, and collecting initiation control messages;
after receiving the initiation control message, if it is determined that a present accelerator currently is not performing uplink and downlink data processing and is not currently performing parameter configuration, parsing and configuring the configuration parameters to the present accelerator, and then reading and writing and processing uplink and downlink data sent by a soft core to the present accelerator based on the configured configuration parameters.

Preferably,
said collecting initiation control messages comprises:
receiving the initiation control messages based on a time interval specified in a protocol; or,
receiving two or more of the initiation control messages at one time, queuing and buffering the two or more initiation control messages.

Preferably,
the configuration parameters comprise: any one or any combination of a wireless mode type, a number of sequences in uplink and downlink processing, a number of samples in a sequence, a storage address of sample data in a memory, a report message format, a parameter configuration ending flag, and bypass enabled of each function point in uplink and downlink.

Preferably, the method further comprises:
if it is determined that the present accelerator is not currently performing uplink or downlink data processing, and not currently performing parameter configuration, generating an initiation acknowledgement, and after generating the initiation acknowledgement, deleting the initiation control message corresponding to the initiation acknowledgement.

Preferably, the method further comprises:
after reading and writing and processing uplink and downlink data sent by a soft core to the present accelerator, reporting a processing completion status message to the soft core.

Preferably, the method further comprises:
configuring a monitoring register to monitor specified key information, analyzing and reporting gathered monitoring information to the soft core.

Accordingly, the present invention further provides a sample-level accelerator, comprising:
a parameter configuration and initiation configuration interface module, configured to: correspondingly forward configuration parameters sent by a bus switching matrix to a parameter receiving module; once receiving an initiation control message, send the initiation control message to an accelerator initiation information receiving module;
the accelerator initiation information receiving module, configured to: after receiving the initiation control message sent by the parameter configuration and initiation configuration interface module, if it is determined that an uplink main processing module is not currently performing uplink data processing and a downlink main processing module is not currently performing downlink data processing, an uplink parameter parsing and distributing module currently is not performing parameter configuration for the uplink main processing module and a downlink parameter parsing and distributing module currently is not performing parameter configuration for the downlink main processing module, generate an initiation acknowledgement; after receiving a processing completion flag sent by the uplink main processing module or the downlink main processing module, report a processing completion status message to the parameter configuration and initiation configuration interface module;
the parameter receiving module, configured to: send the received configuration parameters to the uplink parameter parsing and distributing module as well as the downlink parameter parsing and distributing module;
the uplink parameter parsing and distributing module, configured to: parse the configuration parameters sent by the parameter receiving module to configure to the uplink main processing module;
the downlink parameter parsing and distributing module, configured to: parse the configuration parameters sent by the parameter receiving module to configure to the downlink main processing module;
a data exchange interface module, configured to: send to-be-processed uplink and downlink data sent by the bus switching matrix to a buffer module;
the buffer module, configured to: buffer the uplink and downlink data sent by the data exchange interface module;
the uplink main processing module, configured to: perform a sample-level processing on the uplink data saved in the buffer module based on the configuration parameters, and rewrite the data obtained after the processing is completed into the buffer module; and
the downlink main processing module, configured to: perform a sample-level processing on the downlink data saved in the buffer module based on the configuration parameters, and rewrite the data obtained after the processing is completed into the buffer module.

Preferably, the accelerator further comprises:
an arbitration module, configured to: implement an arbitration processing for reading and writing operations performed by the uplink main processing module and the downlink main processing module on the buffer module.

Preferably, the accelerator further comprises:
a monitoring module, configured to: receive the configuration parameters sent by a parameter configuration and initiation configuration interface module, configure a monitoring register to monitor key information in other modules inside the sample-level accelerator based on the configuration parameters, analyze and report gathered monitoring information to the parameter configuration and initiation configuration interface module;
the parameter configuration and initiation configuration interface module is further configured to: send configuration information to the monitoring module; send the monitoring information reported by the monitoring module to the bus switching matrix.

Preferably,
the accelerator initiation information receiving module is further configured to: when receiving two or more initiation control messages at one time, queue and buffer the two or more initiation control messages; after receiving a processing completion flag sent by the uplink main processing module or the downlink main processing module, start scheduling of next initiation control message.

Preferably,
the configuration parameters configured by the uplink parameter parsing and distributing module to the uplink main processing module and the configuration parameters configured by the downlink parameter parsing and distributing module to the downlink main processing module comprise: any one or any combination of a wireless mode type, a number of sequences in uplink and downlink processing, a number of samples in a sequence, a storage address of sample data in a memory, a report message format, a parameter configuration ending flag, and bypass enabled of each function point in uplink and downlink.

Preferably,
the accelerator initiation information receiving module is further configured to: after generating an initiation acknowledgement, delete the initiation control message corresponding to the initiation acknowledgement.

Preferably,
the parameter configuration and initiation configuration interface module is further configured to: after receiving the processing completion status message sent by the parameter configuration and initiation configuration interface module, report the processing completion status information to a soft core.

With the embodiment of the present invention, compared with the related art, it significantly improves the throughput of a multimode baseband processer; reduces the dependence between a chip hardware design and a wireless communication protocol to a very low level, the initiation and termination of an accelerator are not limited by time, and can be scheduled at any time; various modes can be quickly configured and switched in real-time, and by performing the parameter configuration through the soft-core, the bypass processing of multiple function points can be implemented, and through a flexible design architecture, it avoids complex time slot management and complex protocol configuration, effectively reduces the complexity of configuration and control; achieves various mode integration processing by time division multiplexing the same or similar unit resources of multiple wireless modes, reduces the resource overhead of the chip, saves the cost, and reduces the power consumption; the flexible configuration way and the general standard protocol interface can achieve the integration of accelerators in the soc architecture system of different buses by configuring a bus conversion module, and are more suitable for the flexible interaction of hardware and software co-processing, and improve the system reliability and reusability.

### Brief Description of the Drawings

FIG. 1 is an architectural diagram of a sample-level accelerator in accordance with an embodiment of the present invention;
FIG. 2 is a flow chart of an initiation signal generation method in the sample-level accelerator in accordance with an embodiment of the present invention;
FIG. 3 is a flow chart of a processing of the sample-level accelerator in accordance with an embodiment of the present invention.

### Preferred Embodiments of the Invention

Hereinafter in conjunction with the accompanying drawings, the embodiments of the present invention will be described in detail. It should be noted that in the case of no conflict, embodiments and features in the embodiments of the present application may be arbitrarily combined with each other.

An implementation method and apparatus of a multi-mode base station baseband sample-level accelerator provided in the present embodiment are mainly used in a communications system where two or more modes coexist, so as to achieve the uplink and downlink processing of the multi-mode system baseband sample-level.

In the present invention, a method for using a sample-level accelerator to perform data processing, applied in a multi-mode base station baseband sample-level accelerator, comprises:
receiving configuration parameters, and collecting initiation control messages;
after receiving an initiation control message, if it is determined that a present accelerator currently is not performing uplink or downlink data processing and currently is not performing parameter configuration, parsing and configuring the configuration parameters to the present accelerator, and then reading and writing and processing uplink and downlink data sent by a soft core to the present accelerator based on the configured configuration parameters.

Preferably,
said collecting initiation control message specifically comprises:
receiving the initiation control messages based on a time interval specified in a protocol; or,
receiving two or more initiation control messages at one time, queuing and buffering the two or more initiation control messages.

Preferably,
the configuration parameters comprise: any one or any combination of a wireless mode type, the number of sequences in uplink and downlink processing, the number of samples in a sequence, a storage address of sample data in a memory, a report message format, a parameter configuration ending flag, bypass enabled of each function point in uplink and downlink.

Preferably, the method further comprises:
if it is determined that the present accelerator currently is not performing uplink or downlink data processing, and currently is not performing parameter configuration, generating an initiation acknowledgement, and after generating the initiation acknowledgement, deleting an initiation control message corresponding to the activation acknowledgement.

Preferably, the method further comprises:
after reading and writing and processing uplink and downlink data sent by a soft core to the present accelerator, reporting a processing completion status message to the soft core.

Preferably, the method further comprises:
configuring a monitoring register to monitor specified key information, analyzing and reporting gathered monitoring information to the soft core.

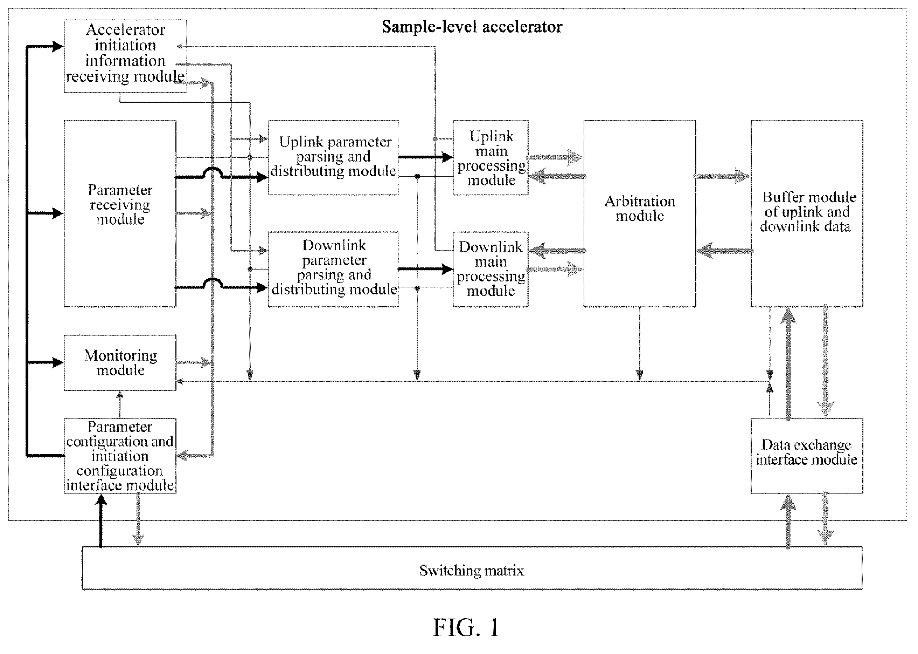

As shown in FIG. 1, the sample-level accelerator consists of eleven sub-modules, and the function of each module is as follows:
the axi2apb_bridge module is a parameter configuration and initiation configuration interface module, the module is connected with the bus switching matrix (axi-matrix), and is used for realizing the interaction between the sample-level accelerator and the soft core. This module is mainly used to implement bus protocol conversion, cross-clock domain processing, and correspondingly forward the configuration parameters sent by the bus switching matrix to the smpla monitor module and the smpla_para_rx module, send the initiation control message sent by the bus switching matrix to the smpla_mail_box module, and is also used to report a received accelerator processing completion flag to the bus switching matrix, and report the monitoring information sent by the smpla_monitor module to the bus switching matrix;
the axi_intf module is a data exchange interface module, and this module is also connected with the bus switching matrix, and is used to implement the data exchange between the sample-level accelerator and the uplink and downlink subsystems. An interface conversion sub-module and a cross-clock domain processing sub-module is built in that module, wherein the interface conversion sub-module is used to provide an interface conversion function, so that the sample-level accelerator is connected with bus matrixes of other different types of interfaces; the cross-clock domain processing sub-module is used to, when the clocks of the bus switching matrix and the sample-level accelerator are not synchronized, always adjust and maintain the two synchronized;
the smpla_para_rx module is a parameter receiving module, and the module is used for receiving configuration parameter information sent by the axi2apb_bridge module, and forwarding the configuration parameter information to the downlink and downlink parameter parsing and distributing modules (i.e. the smpla_para_distx_ul module and the smpla_para_distx_dl module). The configuration parameter information comprises: any one or any combination of a wireless mode type, the number of sequences processed in uplink and downlink processing, the number of samples in a sequence, a storage address of sample data in a memory, a report message format, a parameter configuration ending flag, and bypass enabled of each function point in uplink and downlink ;
the smpla_mail_box module is an accelerator initiation information receiving module that is used to, after receiving an initiation control message configured by the soft-core and sent by the axi2apb_bridge module, generate an initiation acknowledgement when the parameter reconfiguration is completed, and both the smpla_op_ul module and the smpla_op_dl module are idle, and complete the configuration processing. The module is further used to, after receiving the processing completion flag sent by the smpla_op_ul module or the smpla_op_dl modules, start scheduling of the next initiation control message, and report the processing completion status information to the axi2apb_bridge module. When the system configures to terminate one processing for the information, the module is further used to complete the reset of the smpla_op_dl module and the smpla_op_ul module;
the smpla_monitor module is a monitoring module, and is used to configure a monitoring register to monitor some key information in other modules in the sample-level accelerator, and analyze the gathered monitoring information and report it to the axi2apb_bridge module, so that it is easy to debug and locate internal problems;
the smpla_para_distx_ul module and the smpla_para_distx_dl module are respectively the uplink and downlink parameter parsing and distributing modules, their main functions are to achieve analyzing, scheduling and controlling the configuration parameter information sent by the parameter receiving module. The basic functions of the uplink and downlink parameter parsing and distributing modules are the same, but there is slight difference when processing different uplink and downlink function points;
the smpla_op_ul module is an uplink main processing module, and is mainly used to achieve the sample-level processing of the uplink data based on the configuration parameters, comprising: removing cyclic prefix, power adjustment, spectrum compensation, FFT (Fast Fourier Transformation) of different sample points, spectrum shifting, and the like. The arithmetic operations of various modes use the same algorithm module, and depending on the configuration parameters, function points of various different wireless modes can be bypassed;
the smpla_op_dl module is a downlink main processing module, and is mainly used to achieve the sample-level processing of downlink data based on the configuration parameters, comprising: interleaving with zeros, IFFT (Inverse Fast Fourier Transformation) of different sample points, power adjustment, cyclic delay diversity processing, CP (Cyclic Prefix) softening, adding a cyclic prefix, and the like. The arithmetic operations of various modes use the same arithmetic module, and depending on the configuration parameters, function points of various different wireless modes can be bypassed;

The smpla_dt_buffer module is a buffer module of uplink and downlink data, in order to save ram resources, the module uses the single port ram design. The buffer module is used for receiving uplink and downlink exchanged data sent by the axi_intf module and coming from the bus, the module internally uses the handshake acknowledgement manner to realize the traffic control;
the smpla_uldl_arbit module is an arbitration module and is mainly used to achieve the arbitration processing for reading and writing of uplink and downlink data. Since the buffer module in the sample-level accelerator is a single-port ram, through the arbitration module, it can implement the arbitration of reading and writing a total of four channel data in uplink and downlink, and use the req (request) and ack (acknowledgement) manners to perform handshake interaction with the buffer module.

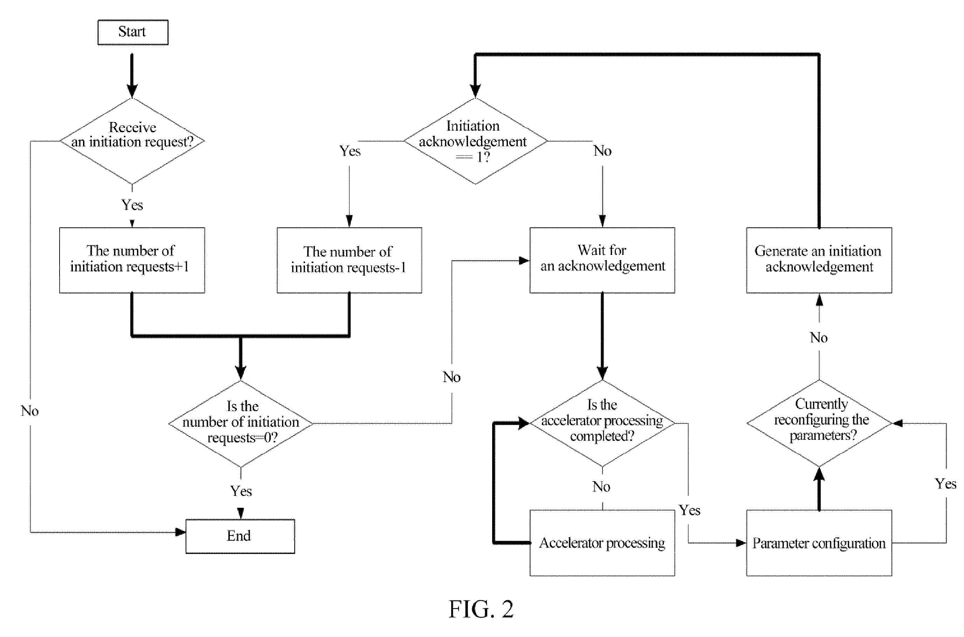

FIG. 2 shows a flow chart of generating an initiation control signal of the sample-level accelerator. Once the smpla_mail_box module receives an initiation control message sent by the axi2apb_bridge module, the number of current activation requests is incremented by 1; in the case that it is determined that the current number of initiation requests is not 0, it is to judge whether the uplink and downlink main processing modules are idle; If both of them are idle, it is to send the configuration parameters to the uplink and downlink parameter parsing and distributing modules to respectively perform the parameter configuration for the uplink and downlink main processing modules, and after the parameter configuration is completed, generate an initiation acknowledgement, and decrement the current number of initiation requests by 1; if there is at least one of the uplink and downlink main processing modules is not idle, after the module processes completely, it performs the subsequent processing steps such as sending the configuration parameters.

In addition, before the sample-level accelerator initiates, the value of the initiation configuration register in the smpla_mail_box module is an initial value. Once receiving an initiation control message sent by the axi2apb_bridge module, the value the initiation configuration register is rewritten to another value, after incrementing the current number of initiation requests by 1, the value of the initiation configuration register is rewritten to the abovementioned initial value.

According to the flow assessment, theoretically, only after the parameter configuration procedure and the uplink and downlink main processing module processing procedure are completed every time, the soft core would send an initiation control message, but in order to enhance the system configuration flexibility, the multitasking process of the soft core will not be interrupted frequently, in the present embodiment, the sample-level accelerator also supports continuously configuring multiple initiation control messages, and the initiation control messages are temporarily stored in the smpla_mail_box module, and enter into the queuing program, and are scheduled orderly. In addition, the smpla_mail_box module also supports the function of reconfiguring all the configuration parameters every time when the initiation control signal is received, or deleting all the initiation control messages after receiving a termination command.

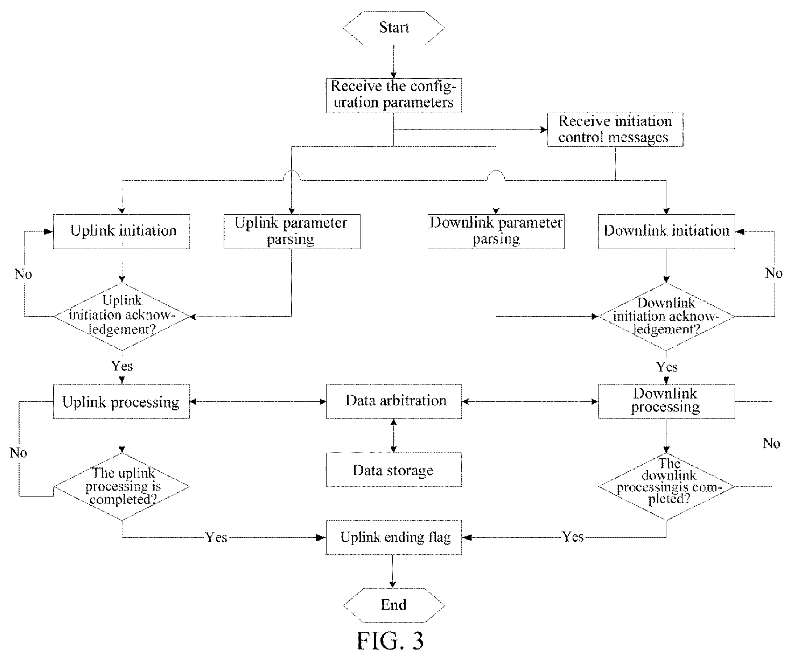

FIG. 3 shows a flow chart of a method for using a sample-level accelerator for data processing, comprising:
entering into the initial state, receiving the configuration parameters, and receiving the initiation control messages in real time. After receiving the configuration parameters, it is to correspondingly distribute them to the uplink and downlink parameter parsing modules to get the parameters parsed; after the parameters are parsed, if receiving the initiation control message and correspondingly generating an initiation acknowledgement, it is to respectively initiate the uplink and downlink data processing procedures (the initiations of uplink and downlink processing have no correlation and will not interfere with each other). After the initiation, the uplink and downlink main processing modules separately read the required data from the ram through the arbitration module to perform calculation, and then write the data obtained after the calculation is completed back to the the ram for storage through the arbitration module; after the uplink and downlink processing procedures are completed, respectively it is to generate processing completed flags, and generate report messages based on the configured report message format, and report them to the soft core through a bus switching matrix.

In the following, two-mode mixing configuration of 8 antennae in a normal CP 20MHz cell under the FDD-LTE mode and 2 antennae in the extended CP 10MHz cell under the TDD-LTE standard is taken as an example to illustrate the specific processing method.

After the system is powered on, in the initial state, the system starts to configure parameters (assuming that the FDD-LTE is configured first), and these parameters comprise: wireless mode, CP type, cell type, the number of antennas, enabling configuration of each function point, data buffer write-read address, various report message formats and ways. Before and after configuring the parameters, the system can initiate the sample-level accelerator, and the initiation control messages are collected into the accelerator initiation information receiving module. When querying out that the number of initiation control messages in the accelerator initiation information receiving module is not zero, it is to start generating an initiation acknowledgement. By querying whether the uplink and downlink main processing modules and the parameter configuration module are idle at this point, it is to determine whether to generate an initiation acknowledgement. When the uplink and downlink main processing modules and the parameter configuration module are all idle, that is, there is no initiation configuration being processed, and there is no new parameter to be updated, it is to start generating an initiation acknowledgement. After the initiation acknowledgement is generated, it is to remove the initiation control message corresponding to the initiation acknowledgement from the accelerator initiation information receiving module, and start the corresponding processing: first parsing and updating the configuration parameters (if there is no configuration parameter to be updated, this step can be skipped), then writing, reading and processing the data. When the configuration of all the 8 antennae in the FDD-LTE 20MHz cell has been completed based on the procedure described in FIG. 3, it indicates that the current initiation control message processing is completed. The soft core can send the initiation control message based on the time interval specified in the protocol, two or more initiation control messages may be configured to the accelerator. When there are a plurality of control messages to be processed in the accelerator initiation information receiving module, an initiation acknowledgement is cyclically generated based on the abovementioned way until all the processing is completed.

In the FDD-LTE processing, if it needs to switch to the TDD-LTE mode, it needs to update the configuration parameters, the parameter update is not limited by the current initiation and processing, and may be performed at any time, but the parameters will only be parsed when the next initiation starts. When configuring new parameters, it will not interrupt the current processing procedure. The initiation control messages associated with the old parameters in the accelerator initiation information receiving module can be cleared or reserved based on the new parameter configuration. Under the same wireless mode, if there are new parameters to be updated, it can be performed at any time without timing restrictions, and can be responded in the next initiation configuration. For example, when the cell deletion occurs frequently, this way has very high flexibility.

When all the configured FDD-LTE or TDD-LTE initiation control messages are processed completely, the sample-level accelerator is in the standby state and waits for a new initiation control message configuration.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention, and is not intended to limit the protection scope of the present invention. According to the summary of the present invention, there may also have many other embodiments, and without departing from the spirit and essence of the present invention, those skilled in the art can make various appropriate changes and modifications according to the present invention, and any changes, equivalent replacements and improvements made within the spirit and principles of the present invention should be included within the protection scope of the present invention.

### Industrial Applicability

In summary, the embodiment of the present invention has the following features:
1. the hardware resources are fully multiplexed to achieve the multi-mode processing. After completing the multi-mode sample-level processing, only one set of resources is used, and with the time division multiplexing mode, only simple parameter configuration is needed, and it does not need to wait for a long time to switch, so as to achieve a seamless mode switch, that is, what you see is what you get, complete data processing under a variety of wireless modes, effectively reduce hardware costs, and reduce power consumption of the chips;
2. the architectural design is simple, and avoids complex scheduling and control. In existing solutions of various wireless modes, the sample-level processing is strongly correlated to the timing and the communication protocol, resulting in very complex system realization, it is necessary to consider stringent switching of the time slices, increase the complexity of the control and scheduling, and it is also necessary to consider mutual dependence between the cells and antennas under different modes in the time domain and in the frequency domain, resulting in a significant increase in design complexity. The proposal performs an accurate assessment on the flows configured through different communication protocols under a variety of modes, and through a rational architecture, it can avoid coordinating the relationship between the processing delay and the data time slices, get rid of the influence of the processing delay on the communication protocol time definition, it uses the cyclic scheduling way of "initiate - process - complete - stop - reinitiate" or "initiate - terminate - reinitiate", which greatly reduces the design complexity and increases the system flexibility, saves the time for developing and debugging. Through analyzing and peeling off the communication protocol, multi-dimensional data in the time domain, the frequency domain, and the space domain as well as their interdependencies are peeled off, and no complex parameter configuration is required, so as to complete the sample-level processing specified in the protocol. It reduces the resource depletion and delay caused by the complex configuration, improves the throughput and reduces the implementation complexity;
3. the standard accelerator output interfaces are easy for multiplexing or integration. Parameters and configuration related to the soft core use the standard amba3.0 apb protocol standard interface, and the interactive interfaces related to the data use the standard axi3.0 master and slave interfaces, an asynchronous clock domain conversion module is built therein, it can be very easily connected with the axi bus matrix that is popular in the industry. If it needs to be connected to other buses, it only needs to add a simple bus interface switching module, which is easy to integrate and multiplex.

## Claims

1. A method for using a sample-level accelerator to perform data processing, applied in a multi-mode base station baseband sample-level accelerator, comprising:
receiving configuration parameters, and collecting initiation control messages;
after receiving the initiation control message, if it is determined that a present accelerator currently is not performing uplink and downlink data processing and is not currently performing parameter configuration, parsing and configuring the configuration parameters to the present accelerator, and then reading and writing and processing uplink and downlink data sent by a soft core to the present accelerator based on the configured configuration parameters.

2. The method of claim 1, wherein,
said collecting initiation control messages comprises:
receiving the initiation control messages based on a time interval specified in a protocol; or,
receiving two or more of the initiation control messages at one time, queuing and buffering the two or more initiation control messages.

3. The method of claim 1, wherein,
the configuration parameters comprise: any one or any combination of a wireless mode type, a number of sequences in uplink and downlink processing, a number of samples in a sequence, a storage address of sample data in a memory, a report message format, a parameter configuration ending flag, and bypass enabled of each function point in uplink and downlink.

4. The method of claim 1, wherein, the method further comprises:
if it is determined that the present accelerator is not currently performing uplink or downlink data processing, and not currently performing parameter configuration, generating an initiation acknowledgement, and after generating the initiation acknowledgement, deleting the initiation control message corresponding to the initiation acknowledgement.

5. The method of claim 1, wherein, the method further comprises:
after reading and writing and processing uplink and downlink data sent by a soft core to the present accelerator, reporting a processing completion status message to the soft core.

6. The method of claim 1, wherein, the method further comprises:
configuring a monitoring register to monitor specified key information, analyzing and reporting gathered monitoring information to the soft core.

7. A sample-level accelerator, comprising:
a parameter configuration and initiation configuration interface module, configured to: correspondingly forward configuration parameters sent by a bus switching matrix to a parameter receiving module; once receiving an initiation control message, send the initiation control message to an accelerator initiation information receiving module;
the accelerator initiation information receiving module, configured to: after receiving the initiation control message sent by the parameter configuration and initiation configuration interface module, if it is determined that an uplink main processing module is not currently performing uplink data processing and a downlink main processing module is not currently performing downlink data processing, an uplink parameter parsing and distributing module currently is not performing parameter configuration for the uplink main processing module and a downlink parameter parsing and distributing module currently is not performing parameter configuration for the downlink main processing module, generate an initiation acknowledgement; after receiving a processing completion flag sent by the uplink main processing module or the downlink main processing module, report a processing completion status message to the parameter configuration and initiation configuration interface module;
the parameter receiving module, configured to: send the received configuration parameters to the uplink parameter parsing and distributing module as well as the downlink parameter parsing and distributing module;
the uplink parameter parsing and distributing module, configured to: parse the configuration parameters sent by the parameter receiving module to configure to the uplink main processing module;
the downlink parameter parsing and distributing module, configured to: parse the configuration parameters sent by the parameter receiving module to configure to the downlink main processing module;
a data exchange interface module, configured to: send to-be-processed uplink and downlink data sent by the bus switching matrix to a buffer module;
the buffer module, configured to: buffer the uplink and downlink data sent by the data exchange interface module;
the uplink main processing module, configured to: perform a sample-level processing on the uplink data saved in the buffer module based on the configuration parameters, and rewrite the data obtained after the processing is completed into the buffer module; and
the downlink main processing module, configured to: perform a sample-level processing on the downlink data saved in the buffer module based on the configuration parameters, and rewrite the data obtained after the processing is completed into the buffer module.

8. The accelerator of claim 7, further comprising:
an arbitration module, configured to: implement an arbitration processing for reading and writing operations performed by the uplink main processing module and the downlink main processing module on the buffer module.

9. The accelerator of claim 7, further comprising:
a monitoring module, configured to: receive the configuration parameters sent by a parameter configuration and initiation configuration interface module, configure a monitoring register to monitor key information in other modules inside the sample-level accelerator based on the configuration parameters, analyze and report gathered monitoring information to the parameter configuration and initiation configuration interface module;
the parameter configuration and initiation configuration interface module is further configured to: send configuration information to the monitoring module; send the monitoring information reported by the monitoring module to the bus switching matrix.

10. The accelerator of claim 7, further comprising,
the accelerator initiation information receiving module is further configured to: when receiving two or more initiation control messages at one time, queue and buffer the two or more initiation control messages; after receiving a processing completion flag sent by the uplink main processing module or the downlink main processing module, start scheduling of a next initiation control message.

11. The accelerator of claim 7, wherein,
the configuration parameters configured by the uplink parameter parsing and distributing module to the uplink main processing module and the configuration parameters configured by the downlink parameter parsing and distributing module to the downlink main processing module comprise: any one or any combination of a wireless mode type, a number of sequences in uplink and downlink processing, a number of samples in a sequence, a storage address of sample data in a memory, a report message format, a parameter configuration ending flag, and bypass enabled of each function point in uplink and downlink.

12. The accelerator of claim 7, wherein,
the accelerator initiation information receiving module is further configured to: after generating an initiation acknowledgement, delete the initiation control message corresponding to the initiation acknowledgement.

13. The accelerator of claim 7, wherein,
the parameter configuration and initiation configuration interface module is further configured to: after receiving the processing completion status information sent by the parameter configuration and initiation configuration interface module, report the processing completion status information to a soft core.
